# EUROPEAN PATENT APPLICATION

(11) **EP 1 434 385 A1**
(43) Date of publication of application: **30.06.2004**
(21) Application number: 02080483.7
(22) Date of filing: 23.12.2002
(51) Int. Cl.: H04L 12/18

(54) **A system, a method and a message interceptor for overload protection in a data network**

(71) Applicant: Koninklijke KPN N.V., 9726 AE Groningen (NL)
(72) Inventor: Norp, Antonius Hendricus Johannes, 2584 EN Den Haag (NL); Corless, Anne Marie, 2584 EN Den Haag (NL)
(74) Representative: Wuyts, Koenraad Maria

(57) **Abstract**

A system for overload protection in a data network (1) for information delivery, comprising a server transmitting a plurality of unicast content messages (5, 5') comprising an identical content, communicatable via a data network (1), having unicast and distribution capabilities, to a plurality of terminals (3, 3') respectively, a message interceptor (8), comprising a computer, arranged for receiving and grouping the plurality of unicast content messages (5, 5') into a distributable content message (6) comprising the identical content, the computer further arranged for communicating the distributable content message (6), to the plurality of terminals (3, 3') via the data network (1), whereby the plurality of unicast content messages(5, 5'), with the identical content, for the plurality of terminals (3, 3') are routable by the data network (1) to the message interceptor (8), and the distributable content message (6) is distributable by the data network (1) to the plurality of terminals (3, 3').

## Description

### Field of the invention

The invention relates to a system for overload protection in a data network.
The invention further relates to a message interceptor for overload protection in a data network.
The invention still further relates to a method for overload protection in a data network.

### Background

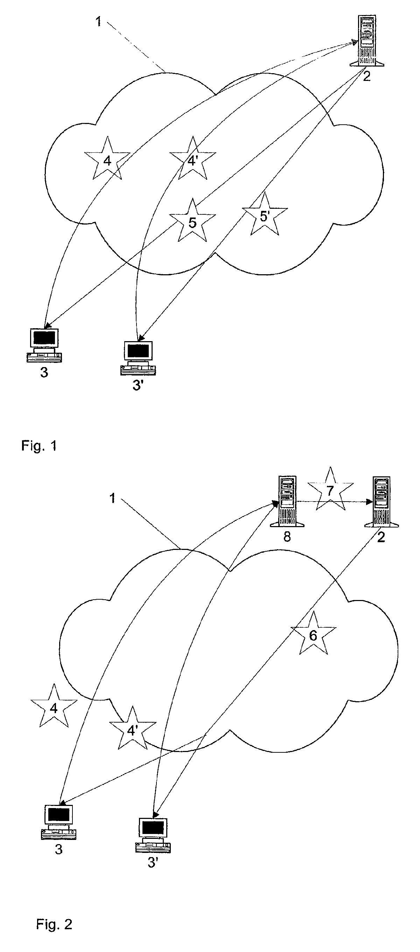

In these years it has become very common to have access to information on public networks for example like the Internet. Various kinds of information are available and various means are available of getting access to such networks.
The information may comprise information specifically designed for a particular purpose. Examples of such information are pictures, sound or music, newscasts, weather forecasts, sports results, etcetera. Such information may, and in this text will further, be referred to as content.
Very often a user who wants to view a particular content source may be charged or billed for each item he downloads or a user may be subscribed to that particular content source.
Such content sources may have many users or subscribers and single content items may be requested and viewed many times. Fig. 1 displays an example of this situation, which comprises a data network 1, optionally comprising a telecom network, a content server 2, a plurality of terminals 3, 3' for displaying content. Content is requested from the content server 2 by means of a plurality of content request messages 4, 4'. The content server responds by sending a plurality of unicast content messages 5, 5'.
With the growth of bandwidth capacity on the public networks like the Internet and also the greater bandwidths for gaining access to such networks, the size of content items is growing. Pictures or music fragments may have sizes in the order of hundreds of kilobytes or even megabytes. And the frequency of use and the size of the content are ever growing.
This situation may give rise to capacity problems, or overload problems, usually related to network elements that have to do with the storage and retrieval of the content. Content is usually stored on a content server in a data network. This can be a computer, connected to the data network, having storage facilities and is arranged to search and retrieve data requested via the data network. The data network usually facilitates messaging on a one-to-one basis, which means that a message is sent via the data network from one apparatus connected to the data network, e.g. a terminal, to one other apparatus, also connected to the data network, e.g. a server. Apparatus in a data network is normally known in the data network by a network address, e.g. in the Internet by an IP address.
The data network may also have group addresses, which not necessarily are associated with a physical apparatus. The data network may use these addresses for multicast messaging, whereby connected apparatus are subscribed to such a group address. When a message is communicated via the data network having this group address as a destination, all apparatus subscribed to this address may receive the message.
For example in the Ipv4 standard for IP addressing, a multicast or broadcast message can be composed by marking the lower IP address bytes in the destination address field of the IPv4 header with "255", e.g. 192.168.*255*.*255*., which means that all connected nodes in the address space of 192.168.xxx.xxx will receive a message.
A unicast address in the destination address field has lower address bytes with a value other than 255 or 0.
The data network may also have communication channels, at least one of which may be used for broadcasting messages. All connected apparatus receive such broadcast messages, provided they are enabled to receive messages via such a channel. Normally, in a situation without any measures for preventing overload, content is delivered on a unicast basis. That means that content is requested and delivered on a one-to-one basis. A user sends a unicast content request to the content server and the content server delivers the content as a unicast content message.
Overload occurs when many users request the same content. First of all the data network communicating the content requests to the server may be overloaded, although content requests are usually small, but the server who must respond to every content request has to deliver the same content over and over again. Also the data network communicating the content messages from the server to the user will be overloaded.

A first solution for this problem is known as caching, a method well known to a person skilled in the art. In this method content, which is often requested, is stored in a cache, which comprises fast access storage, relieving the content server from having to retrieve the same content over and over again.
Caches can be utilized in a segment of the data network, located remotely from the server, in order to prevent overload not only in the content server, but especially for the data network between the data network segment and the server. Content request messages first pass the local cache. If the requested content is present, the content may be delivered from the local cache, without the server having to search, retrieve and communicate to the user via the data network.
The communication in this method still utilizes unicast content messages.

The Japanese patent publication JP2000-181836 shows a second solution for the overload problem. It describes an interceptor of unicast request messages for one and the same content, which can be grouped to a single multicast content request.
An example of this situation is depicted in fig. 2, which comprises a network 1 which may comprise a data network and optionally a telecom network.
Content may be requested by a plurality of terminals 3, 3' using a plurality of content request messages 4, 4'. The plurality of content request messages 4, 4' are routed to a message interceptor 8, which scans the plurality of requests 4, 4' for the same content. The message interceptor 8 groups the plurality of content request messages into a single multicast content request 7, which is sent to the content server 2. The content server 2 receives the single multicast content request message and sends a distributable content message 6 in response.
According to the state of the art the distributable content message 6 may be a multicast message. The message interceptor 8 negotiates with the plurality of terminals 3, 3' of the requesting users on which group address the requested content will be delivered. This method is very efficient to protect the content server, since only a single request has to be searched, retrieved and communicated.
However nowadays content providers, having a content server 2, and data network access providers (ISP's for Internet) work independently. The use of multicast addresses or broadcast channels is the responsibility for the data network access provider and network operators. Furthermore a content provider operating a content server will want to register each request for content for example for billing purposes. In that case is no interest of the content provider to enable multicast or broadcast content delivery, subsequently segments of the data network may become overloaded with unicast content messages when many users in that segment request the same content.
This may be the case when users, which are located in the same place, simultaneously request such content.
For example listeners to a speech during for example a conference or spectators of a football game, in which particular content is mentioned, may all more or less at the same time request the same content item in a particular area, e.g. a conference hall or a football stadium. This may cause an overload in a local network segment and not only the data network segment, but also the means to get access to the data network. This may be the case when the data network also comprises a radio or wireless network, giving access to mobile terminals to the data network where content may be available.

### Summary

It is an object of the invention to provide a solution for overload of a data network segment connecting terminals to a data network, whereby the terminals request for the same content from a content server.

This object is achieved according to the invention by a system for overload protection in a data network, which may comprise a server arranged to transmit a plurality of unicast content messages comprising an identical content, which can be communicated via a data network, having unicast and distribution capabilities, to a plurality of terminals respectively, each one of the plurality of unicast content messages may corresponding to one of the plurality of terminals, a message interceptor, which may comprise a computer, arranged for receiving from the data network the plurality of unicast content messages with the identical content, the computer may further be arranged for grouping the plurality of unicast content messages with the identical content into a distributable content message comprising the identical content, the computer may further be arranged for communicating the distributable content message, to the plurality of terminals via the data network, whereby the plurality of unicast content messages, with the identical content, for the plurality of terminals may be routable by the data network to the message interceptor, and the distributable content message may be distributable by the data network to the plurality of terminals. This way a network segment comprising terminals in a geographical area can be protected from overload by frequent requested content, independent from a content provider and the server needs only to be capable of handling unicast content requests resulting in unicast content messages.

An embodiment according to the invention, wherein the message interceptor may be arranged to communicate the distributable content message to a node in the data network, the node defining a network segment, and the node may be arranged for distributing the distributable content message via the data network to at least one of the plurality of terminals, is advantageous since it allows a network segment, associated with a location, having the plurality of terminals requesting the identical content, to be protected from overload.

Another embodiment according to the invention, wherein the distributable content message may comprise a broadcast content message or a multicast content message, and the data network distribution capability may comprise the ability to broadcast or multicast the broadcast or the multicast content message respectively, is advantageous since the data network has multicast or broadcast properties which can easily be utilised by the message interceptor and the message is not necessarily multicast or broadcast throughout the whole network.

Another embodiment according to the invention, wherein the plurality of terminals may comprise a mobile terminal, the data network may comprise a radio network, the data network may communicate with a radio base station which can be arranged to communicate with the mobile terminal via the radio network, and the radio network may comprise a radio interface and the radio network is arranged to broadcast the distributable content message, is advantageous since the radio networks with radio terminals can easily be overloaded and distributing by broadcasting in the radio network is a very simple and cheap alternative for unicast communication.

The object of the invention is also achieved according another embodiment of the invention by a message interceptor for overload protection in a network for information delivery, which may comprise a computer, arranged for receiving from a data network, having unicast and distribution capabilities, a plurality of unicast content messages with the identical content, the computer may further be arranged for grouping the plurality of unicast content messages with the identical content into a distributable content message comprising the identical content, the computer may further be arranged for communicating the distributable content message, to a plurality of terminals via the data network, each one of the plurality of terminals corresponding to one of the plurality of unicast content messages, whereby the plurality of unicast content messages, with the identical content, for the plurality of terminals may be routable by the data network to the message interceptor, and the distributable content message may be distributable by the data network to the plurality of terminals.

An embodiment according to the invention, wherein the computer may be arranged to communicate the distributable content message to a node in the data network, the node defining a network segment, the node may be arranged for distributing the distributable content message via the data network to at least one of the plurality of terminals, is advantageous since it allows a network segment, associated with a location, having the plurality of terminals requesting the identical content, to be protected from overload.

Another embodiment according to the invention, wherein the distributable content message may comprise a broadcast content message or a multicast content message, and the data network distribution capability comprises the ability to broadcast or multicast the broadcast or the multicast content message respectively, is advantageous since the data network has multicast or broadcast properties which can easily be utilised by the message interceptor and the message is not necessarily multicast or broadcast throughout the whole network.

The object of the invention is also achieved in yet another embodiment according to the invention in a method for overload protection in a data network, which may comprise communicating by a server of a plurality of unicast content messages having an identical content, via a data network to a plurality of terminals respectively, each one of the plurality of unicast content messages may correspond to one of the plurality of terminals, routing the plurality of unicast content messages with the identical content to a message interceptor, receiving the plurality of unicast content messages with the identical content by the message interceptor, grouping the plurality of unicast content messages with the identical content into a distributable content message by the message, interceptor, distributing the distributable content message to the plurality of terminals via the data network by the message interceptor.

An embodiment according to the invention may comprise communicating the distributable content message to a node in the data network, the node defining a network segment by the message interceptor, distributing the distributable content message via the data network to at least one of the plurality of terminals by the node, is advantageous since it allows a network segment, associated with a location, having the plurality of terminals requesting the identical content, to be protected from overload.

Another embodiment according to the invention may comprise distributing a broadcast message or a multicast message, whereby the data network may be arranged to broadcast or multicast the broadcast or the multicast message respectively, is advantageous since the data network has multicast or broadcast properties which can easily be utilised by the message interceptor and the message is not necessarily multicast or broadcast throughout the whole network.

Another embodiment according to the invention may comprise distributing the broadcast message or the multicast message to at least one mobile terminal, distributing the broadcast message or the multicast message via a radio network, distributing the broadcast message or the multicast message via a radio base station which may be arranged to communicate with the mobile terminal via the radio network, and broadcasting the broadcast message or the multicast message via a radio interface, is advantageous since the radio networks with radio terminals can easily be overloaded and distributing by broadcasting in the radio network is a very simple and cheap alternative for unicast communication.
Various modifications or combinations of the above mentioned elements may comply with the invention claimed in this patent application.

### Brief description of the drawings

Figure 1 shows terminals requesting content from a content server in a network, according to the state of the art.
Figure 2 shows terminals requesting content from a content server in a network, using a message interceptor according to the state of the art.
Figure 3 shows a content server sending content messages to terminals via a message interceptor, according to the invention.
Figure 4 shows a content server sending content messages to terminals via a message interceptor and a node in the data network, according to the invention.
Figure 5 shows a content server sending content messages to mobile terminals via a message interceptor, a radio base station and a radio interface, according to the invention.
Figure 6 shows a message flowchart of an embodiment according to the invention wherein the data network comprises a fixed telecommunications network.
Figure 7 shows a message flowchart of an embodiment according to the invention wherein the data network comprises a mobile telecommunications network.
Figure 8 shows a message flowchart of a further example of an embodiment according the invention comprising a mobile telecommunications network, incorporating concepts of the Mobile Broadcast and Multicast Service (according to ref. 3GPP TS 23.246) to optimally determine which base stations to use for broadcasting.

### Detailed description

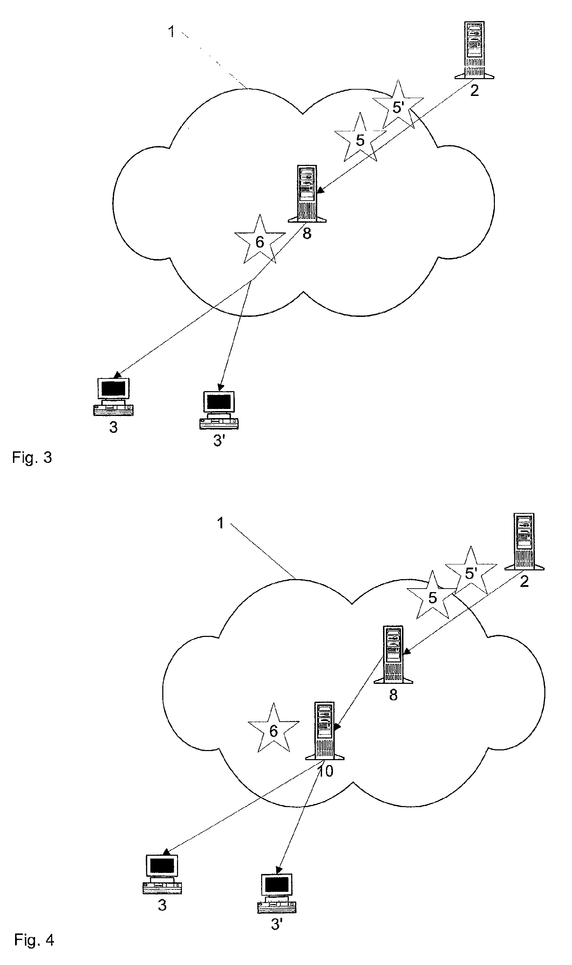

The invention may be embodied according to figure 3, wherein a plurality of unicast content messages 5, 5' are routed in a network 1 towards a message interceptor 8. The message interceptor groups the plurality of unicast content messages 5, 5' into a distributable content message 6, which is distributed by the data network to a plurality of terminals 3, 3'.

A terminal according the invention may comprise a communication device, a user interface, a controller and a memory. The communication device may be connected to at least one of the user interface or the controller.
The communication device is arranged to communicate with a data network and may comprise a receiver for the reception of at least one of control, voice or data signals from the data network, and a transmitter for the transmission of at least one of control, voice or data signals from the user interface or at least one of the user interface or the controller.
The communication device may be controllable by the controller.
The user interface may comprise an output device such as a speaker for converting the at least one of control, voice or data signals into an audible signal. The output device may also comprise a display where the at least one of control, voice or data signals may be converted in a alphanumerical or graphical image.
The user interface may further comprise an input device such as a microphone for converting speech into the at least one of control, voice or data signals or a keypad for converting key strokes into the at least one of control, voice or data signals or a camera for converting visual images into at least one of control or data signals. Other input devices for converting physical properties into control or data signals are possible.
The user interface may be controllable by the controller.
The controller may be arranged to process at least one of the control, voice or data signals from the user interface to the communication device or vice versa.
The controller may be arranged to communicate via the communication device with the data network.
The memory is connected to the controller for permanently or temporarily storing data or programs or both used in the communication device or in the user interface.
An example of a program permanently stored in the memory is a browser for displaying data from the data network on the display of the user interface. The browser and the display may for example support display of images or image sequences.

An example of a terminal 3 or 3' may be a telephone having a key input for communication control and an information display.
Another example of a terminal is a personal computer, which may incorporate various other functions with the functions and / or devices already mentioned. Other function may for example be word processing or database access or any other office or non-office application.
Other examples of terminals may apply.

A content server 2 may originate the plurality of unicast content messages 5, 5', but they can have different sources. Typically the plurality of unicast content messages have been caused by a plurality of content request message 4, 4' from a plurality of terminals 3, 3' to a content server 2.

A server comprises a computer, connected to a network, which may be accessed by more than one user.
The computer may comprise a processor, a memory, a mass storage and a network interface. The computer may also comprise a keyboard, a display and a mouse as a pointing device cooperating with the display.
The computer has an operating system, which may be loaded from the mass storage into the memory and may than be executed by the processor. The operating system allows users to start, stop and access various tasks by the more than one user. Such a task may also be loaded from the mass storage into the memory and executed from there by the processor. The operating system allows users to get access to the computer via the data network interface. A user using a terminal can have access to the server via a network.
Servers are normally used for, but not limited to:
- accessing files that may be stored on the mass storage, whereby some files may be common to a group of users,
- accessing common services, for example printing,
- accessing data stored in databases, accessing content, stored on the mass storage, using web server software, allowing the content to be available in html or other standardised format, whereby content may be images, music files in various formats or texts and files with data having mixed formats.

The data network 1 routes the unicast content messages 5, 5' along a path through the data network. The path is determined by the destinations to which the messages are addressed. For that purpose a unicast content message comprises a destination address and a content part.
According to the invention the data network 1 routes the unicast content messages 5, 5' to a message interceptor 8.
The message interceptor 8 may comprise a computer connected to the data network 1. The message interceptor 8 is arranged to check the unicast content messages 5, 5' by reading the address part and the content part. When the content part of the unicast content messages 5, 5'is the same, then the message interceptor 8 saves the content in a first memory and saves the addresses in a second memory. The moment of saving the content and addresses may depend on the number of unicast content messages 5, 5', ... having the same content, or the total amount in kilobytes or megabytes in content of the intercepted messages. Other criteria may apply.
The message interceptor 8 is arranged to distribute the stored content, by first notifying the terminals 3, 3' of which the addresses were stripped from the unicast content messages 5, 5' and stored in the second memory, that a distributable content message 6 will be distributed across the data network. The distributable content message 6 comprises a distribution medium and the content that was stored in the first memory. The terminals that were notified in this manner may now adapt themselves for receiving the distributable content message 6 content via the distribution medium.
The message interceptor is arranged to secondly send the distributable content message 6 via the data network using the distribution medium chosen.
Depending on the location in the data network, the message interceptor 8 may send the distributable content message 6 to a particular network segment, a segment communicating with the terminals 3, 3'.
An embodiment of the distributable content message 6 can be a multicast content message, comprising a reference to a multicast address available in the data network, and the content stored in the first memory of the message interceptor.
The terminals 3, 3' must be notified by unicast notification messages that a multicast message carrying content will be sent, using the multicast address chosen. The terminals 3, 3' are arranged to switch to receiving the multicast content message, using the multicast address.
In another embodiment of the distributable content message can be a broadcast content message comprising a reference to a broadcast channel available in the data network, and the content stored in the second memory of the message interceptor.
The terminals 3, 3' must be notified by unicast notification messages that a broadcast message carrying content will be sent, using the broadcast channel chosen. The terminal 3, 3' are arranged to switch to receiving the broadcast content message using the specified broadcast channel.

The invention may further be embodied according to figure 4.
For routing messages, the data network 1 may have nodes 10 such as routers, gateways, bridges, etc.. The data network has in this way a data network segment associated with a node 10.
According to the invention, the message interceptor 8 may be arranged to send the distributable content message 6 wrapped in a unicast content message to the node with an instruction to distribute it from the node onwards. A person skilled in the art may know this phenomenon as "tunneling".
Tunneling may also exist between a first and a second node 10 in the data network. The message interceptor can in another embodiment also be connected to the tunnel in such a way that unicast content messages which are sent through the tunnel from the first and the second node are intercepted and modified into a distributable content message 6, which is than sent to the second node.

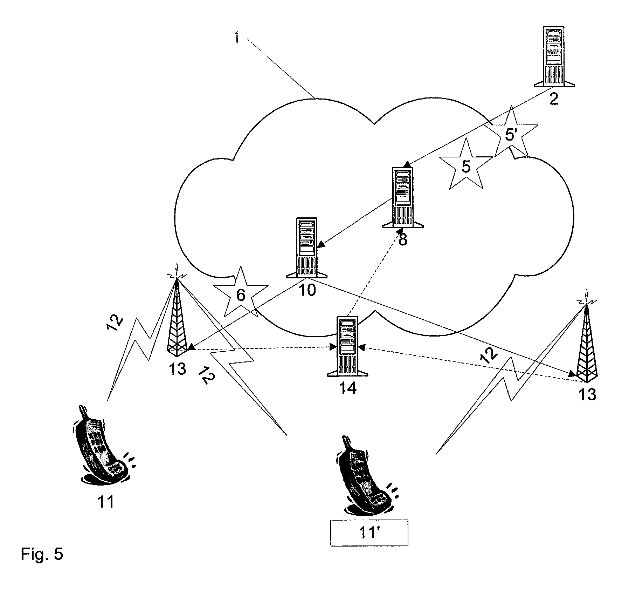

The invention may further be embodied according to figure 5.
In this embodiment, the data network is extended with a radio network or a mobile telecom network comprising a radio interface 12, and at least one radio base station 13.
The radio base station 13 communicates via the radio interface with a plurality of mobile terminals 11, 11'.

A mobile terminal may comprise an RF unit, a user interface, a controller, a memory and energy storage. The RF unit may be connected to the energy storage and at least one of the user interface or the controller.
The RF unit is arranged to communicate with a radio telecom network and may comprise a receiver for the reception of at least one of control, voice or data signals from the radio telecom network, and a transmitter for the transmission of at least one of control, voice or data signals from the user interface or at least one of the user interface or the controller. The RF unit may further comprise an antenna, connected to the receiver and transmitter. The RF unit may be controllable by the controller.
The user interface may comprise an output device such as a speaker for converting the at least one of control, voice or data signals into an audible signal. The output device may also comprise a display where the at least one of control, voice or data signals may be converted in a alphanumerical or graphical image.

The user interface may further comprise an input device such as a microphone for converting speech into the at least one of control, voice or data signals or a keypad for converting key strokes into the at least one of control, voice or data signals or a camera for converting visual images into at least one of control or data signals.
The user interface may be controllable by the controller.
The controller may be arranged to process at least one of the control, voice or data signals from the user interface to the RF unit or vice versa.
The controller may be arranged to communicate via the RF unit and the radio telecom network with a data network.
The memory is connected to the controller for permanently or temporarily storing data or programs or both used in the RF unit or in the user interface.
An example of a program permanently stored in the memory is a browser for displaying data from the data network on the display of the user interface. The browser and the display may for example support display of images or image sequences.
An example of a mobile terminal is a mobile or wireless telephone. Nowadays GSM (Global System for Mobile communications) is a common standard for mobile phones. Another example of a mobile terminal is a PDA (Personal Digital Assistant), insofar it has been equipped with an RF unit. Any portable terminal connected to an RF unit can be considered as a mobile terminal.
Other examples are a palmtop, laptop or any portable computer or PC having an RF unit or connected to a mobile phone.

An example of an embodiment of a radio network according to the invention is a GPRS (General Packet Radio Service) network, which is an enhancement of the already known GSM technology.
A GPRS network normally has a mobile network node or GGSN (Gateway GPRS Serving/Support Node). The GGSN is the entry node of the GPRS network and communicates with the data network 1. The GGSN may be the node 10 with which the message interceptor 8 communicates. In that case the GGSN receives the distributable content messages.
Already strategies have been worked out for distributing a distributable content message 6 to the mobile terminals 11, 11' in the GPRS network. A description for this can be found in Technical report 3GPP TR 23.846 1.1.1 (2002-01) of the 3^{rd} generation Partnership Project.

The use of a message interceptor 8 according to the invention is particularly advantageous in this situation, since it allows a GPRS network to be protected from overload, independent from a content provider.
A radio management system 14 can detect overload situations on the radio base stations. The radio management system 14 can report these conditions to the message Interceptor 8, which may than be activated accordingly.
A GPRS network also has sub nodes also known as SGSN (Serving GPRS Support Node). A SGSN communicates with at least one radio base station.
In a GPRS network a SGSN communicates with the GGSN using tunnels. So a message interceptor may also be used between the GGSN and an SGSN, which may protect a group of radio base stations.
It is also possible to use a message interceptor 8 between a SGSN and a radio base station just to protect this one radio base station.
When a distributable content message 6 has arrived in the radio part of the data network, the radio network can actually broadcast the distributable content message 6.
So broadcasting is than accomplished on a physical level by the radio interface.
UMTS (Universal Mobile Telecommunication System) networks have a similar architecture using a gateway at the entry of the data network and sub nodes for controlling radio base stations.

The data network 1 in a preferred embodiment is an IP-network such as the Internet, but any other data network that supports unicast, and at least one of multicast or broadcast messaging may apply.
According to the invention any combination of networks may apply as long as the combination supports unicast, and at least one of multicast or broadcast messaging.

As a radio network, a wireless LAN may also apply. In a wireless LAN the base station have a base station controller which is acts as a node in the data network 1 it is connected to.

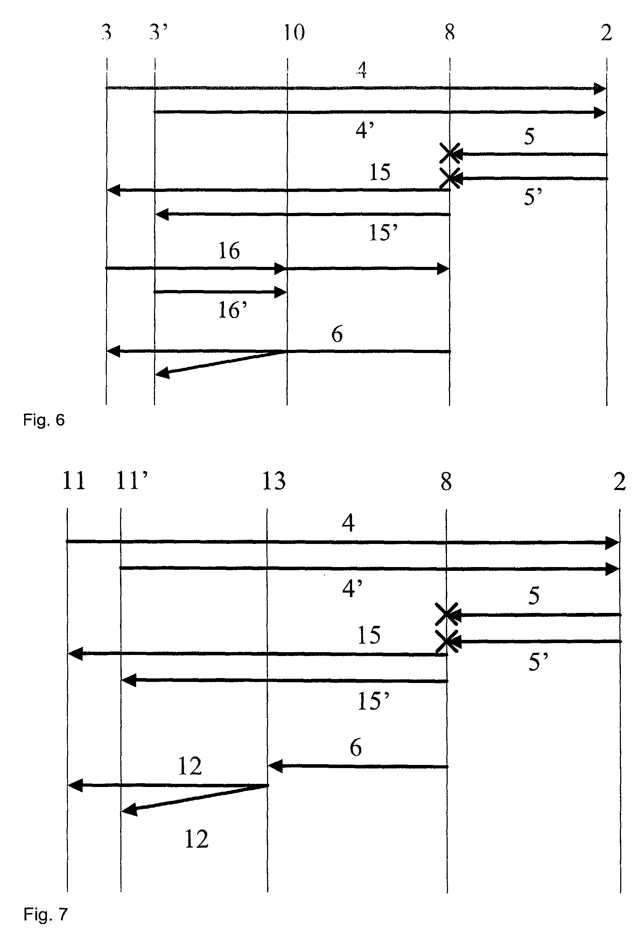

An example of an embodiment according to the invention wherein the data network comprises a fixed telecommunications network is depicted in figure 6. The telecommunications network comprises or communicates with a plurality of terminals 3 and 3', communicating with a node 10 in a data network, connected to a message interceptor 8 and a content server 2.
A potential overload situation that can be prevented by the invention typically originates from a plurality of terminals 3, 3' sending a plurality of unicast content requests 4, 4' for the same content to a content server 2, within a certain time period. These unicast content requests 4, 4' result in the content server 2 sending an equal number of unicast content messages 5 and 5' with the same content back to the terminals 3, 3'. These unicast content messages 5 and 5' are intercepted by the message interceptor 8. The message interceptor 8 monitors the content of the content messages 5 and 5' and has a statistical process to determine when too many messages with the same content are sent. Too many messages with the same content can cause an overload situation in the data network, which can be prevented by the invention. The message interceptor 8 can also take network parameters like loading of the data network into account. According to the invention, when the message interceptor 8 decides to intercept the unicast content messages 5 and 5', the message interceptor 8 does not forward the unicast content messages 5 and 5', but stores the content and generate multicast announcements 15 and 15', to be sent to each of the terminals 3 and 3'. These multicast announcement messages 15 and 15' may contain information on the time T and a multicast address, for example A, on which the content will be distributed. Upon receipt of the multicast announcement messages 15 and 15', the terminals 3 and 3' generate multicast group join messages 16 and 16' (ref. IP Multicast IETF RFC1112) to join the multicast group that receives messages sent with the multicast address A. The multicast group join messages 16 and 16' will configure the message interceptor 8 and node 10 such that multicast messages with the multicast address A will be routed to terminals 3 and 3' respectively. At the time announced in the multicast announcements 15 and 15' and using the multicast address indicated in the multicast announcements 15 and 15', the message interceptor 8 will distribute the content from the multiple content messages 5 and 5' in a single distributable content message 6, whereby in this example a multicast message is used. The message interceptor 8 shall allow the terminals 3 and 3' sufficient time to perform the multicast group join procedure with messages 16 and 16' before sending the multicast content message 6. According to the well know IP Multicast mechanism (ref. IP Multicast IETF 1112) the multicast content message 6 is copied by the node 10 and sent to the plurality of terminals 3 and 3'.

A further example of an embodiment according to the invention wherein the data network 1 comprises a mobile telecommunications network is depicted in figure 7. The telecommunications network comprises a plurality of mobile terminals 11 and 11', communicating with at least one base station 13, communicating with a message interceptor 8 and a content server 2 in a data network. Note that there may also be several base stations connected to the message interceptor 8. Such base stations could provide radio connections to further mobile terminals.
A potential overload situation that can be prevented by the invention typically originates from a number of terminals 11, 11' sending unicast content requests 4 and 4' for the same content to a content server, within a certain time period. These unicast content requests 4,4' result in the content server 2 sending an equal number of unicast content messages 5 and 5' with the same content back to the mobile terminals. These unicast content messages 5 and 5' are routed to and intercepted by the message interceptor 8. The message interceptor 8 monitors the content of the content messages 5 and 5' and has a statistical process to determine when too many messages with the same content are sent. Too many messages with the same content can cause an overload situation, particularly on the radio link between the mobile terminals 11 and 11' and the at least one base station 13, which can be prevented by the invention. The message interceptor 8 can also take parameters like loading of the radio link into account. According to the invention, when the message interceptor 8 decides to intercept the unicast content messages 5 and 5', the message interceptor 8 does not forward the unicast content messages 5 and 5', but stores the content in a storage and generates multicast announcements 15 and 15', to be sent to each of the terminals 11 and 11'. These multicast announcement messages 15 and 15' contain information on a time T and a broadcast channel B on which the content will be distributed. After receipt of the multicast announcement messages 15 and 15', the terminals 11 and 11' will be set to listen to broadcast channel B at time T. The message interceptor 8 further retrieves the content from the storage and sends it in a single distributable content message 6 to the at least one base station 13. In case there are multiple base stations connected to message interceptor 8, it will broadcast the distributable content message 6 to the multiple base stations connected. At the time announced in the multicast announcements 15 and 15' and using broadcast channel B indicated in the multicast announcements 15 and 15', the multiple base stations will broadcast the content in a radio broadcast message 12. The message interceptor 8 shall allow the terminals 11 and 11' sufficient time to be set up to listen to the broadcast channel B before broadcasting the distributable content message 6.
In this example it is also possible that the distributable content message 6 is multicast to the base stations 13, 13', whereby the base stations 13, 13' broadcast a radio broadcast message 12 to the mobile terminal 11, 11'.

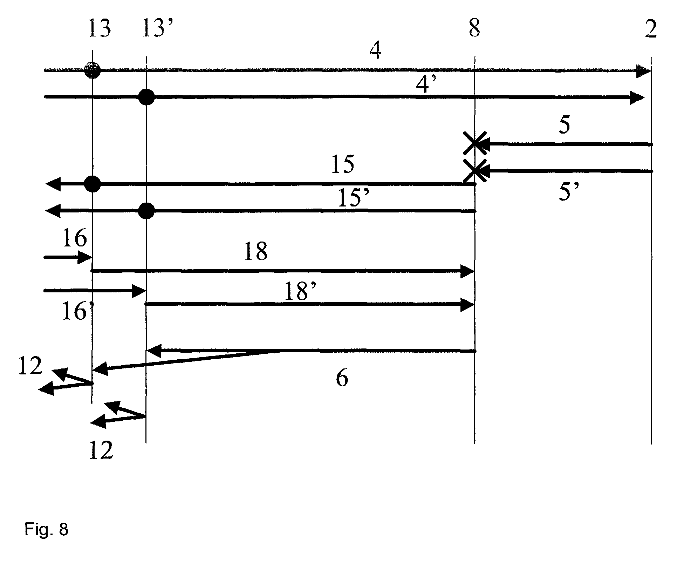

A further example of an embodiment according the invention comprising a mobile telecommunications network incorporates concepts of the Mobile Broadcast and Multicast Service (according to ref. 3GPP TS 23.246) to optimally determine which base stations to use for broadcasting, and is depicted in figure 8. In this example the telecommunications network comprises a plurality of base stations 13, 13', communicating with a message interceptor 8 and a content server 2. Note that each of the base stations 13, 13' may communicate with a plurality of mobile terminals 11, 11'. A potential overload situation that can be prevented by the invention typically originates from a number of mobile terminals 11, 11' sending requests 4 and 4' for the same content to a content server, within a limited time period. In the example here, all requests 4 and 4' are received via base station 13 and 13'. The content requests 4 and 4' result in the content server 2 sending an equal number of unicast content messages 5 and 5' with the same content back to the mobile terminals. The message interceptor 8 decides to intercept the content messages 5 and 5', stores the content in a storage and generates multicast announcements 15 and 15', to be sent to the mobile terminals that originated the content requests 4 and 4'. These multicast announcements 8 and 8' include a multicast/broadcast reference. In this example all multicast announcements are sent only via base station 13 and 13'. After receipt of the multicast announcement messages 15 and 15', the mobile terminals will send a group join messages 16 and 16', including the broadcast/multicast reference to base station 13 and 13'. Upon receipt of the first join message 16, the base stations 13 will send a multicast group join message 18 (according to RFC1112) to join the multicast group that receives messages sent with the multicast address associated with the multicast/broadcast reference. This message serves to indicate to the message interceptor 8 that at least one mobile terminal 11, that should receive the content, is connected to base station 13. Similarly a mobile terminal 11', communicating with base station 13', that should receive the content can send a second join message 16' whereupon the base station 13' can send a multicast group join message 18' to the message interceptor 8. Hence the stored content should be broadcast via base station 13 and base station 13' to the terminals 11 and 11'. Note that no other base stations join the multicast group, as it does not receive any join messages from mobile terminals. Broadcasting the content via base stations other than 13 or 13' would only waste radio resources. The message interceptor 8 retrieves the content from the storage and sends it to base station 13 and 13' using a distributable message 6, usually a multicast message. This way all base stations 13, 13' that have indicated they have mobile terminals 11, 11' connected that want to receive the content, are reached with the single distributable content message 6. At the time announced in the multicast announcements 15 and 15', the base station 13 and 13' will broadcast the content in a radio broadcast messages 12 to all listening mobile terminals 11 and 11 ".

Other combinations of elements or steps as presented in this text may apply.

## Claims

1. A system for overload protection in a data network for information delivery, comprising
• a server (2) arranged to transmit a plurality of unicast content messages (5, 5') comprising an identical content, communicatable via a data network (1), having unicast and distribution capabilities, to a plurality of terminals (3, 3') respectively, each one of the plurality of unicast content messages (5, 5') corresponding to one of the plurality of terminals (3, 3'),
• a message interceptor (8), comprising
o a computer, arranged for receiving from the data network the plurality of unicast content messages (5, 5') with the identical content,
o the computer further arranged for grouping the plurality of unicast content messages(5, 5') with the identical content into a distributable content message (6) comprising the identical content,
o the computer further arranged for communicating the distributable content message (6), to the plurality of terminals (3, 3') via the data network (1),
• whereby the plurality of unicast content messages (5, 5'), with the identical content, for the plurality of terminals (3, 3') are routable by the data network (1) to the message interceptor (8), and
• the distributable content message (6) is distributable by the data network (1) to the plurality of terminals (3, 3').

2. The system according to claim 1, wherein
• the message interceptor (8) is arranged to communicate the distributable content message (6) to a node in the data network (1), the node defining a data network segment,
• the node is arranged for distributing the distributable content message (6) via the data network (1) to at least one of the plurality of terminals (3, 3').

3. The system according to claim 1 or 2, wherein
• the distributable content message (6) comprises one of a broadcast content message and a multicast content message, and
• the data network (1) distribution capability comprises the ability to broadcast or multicast the broadcast or the multicast content message respectively.

4. The system according to claim 2 - 3, wherein
• the plurality of terminals (3, 3') comprise a mobile terminal (11),
• the data network (1) comprises a radio network,
• the data network (1) communicates with a radio base station which is arranged to communicate with the mobile terminal (11) via the radio network, and
• the radio network comprises a radio interface (12), and
• the radio network is arranged to broadcast the distributable content message (6).

5. The system according to any one of claim 2 - 4, wherein the node comprises a GGSN.

6. The system according to any one of claim 2 - 4, wherein the node comprises an SGSN.

7. A message interceptor (8) for overload protection in a data network (1) for information delivery, comprising
• a computer, arranged for receiving from the data network (1) a plurality of unicast content messages(5, 5') with the identical content,
• the computer further arranged for grouping the plurality of unicast content messages(5, 5') with the identical content into a distributable content message (6) comprising the identical content,
• the computer further arranged for communicating the distributable content message (6), to a plurality of terminals (3, 3') via the data network (1), each one of the plurality of terminals (3, 3') corresponding to one of the plurality of unicast content messages (5, 5'),
• whereby the plurality of unicast content messages(5, 5'), with the identical content, for the plurality of terminals (3, 3') are routable by the data network (1) to the message interceptor (8), and
• the distributable content message (6)is distributable by the data network (1) to the plurality of terminals (3, 3').

8. The message interceptor according to claim 7, wherein
• the computer is arranged to communicate the distributable content message (6) to a node in the data network (1), the node defining a data network segment,
• the node is arranged for distributing the distributable content message (6) via the data network (1) to at least one of the plurality of terminals (3, 3').

9. The message interceptor according to claim 7 or 8, wherein
• the distributable content message (6) comprises one of a broadcast content message and a multicast content message, and
• the data network (1) distribution capability comprises the ability to broadcast or multicast the broadcast or the multicast content message respectively.

10. A method for overload protection in a data network (1) for information delivery, comprising
• communicating by a server (2) a plurality of unicast content messages (5, 5') having an identical content, via the data network (1) to a plurality of terminals (3, 3') respectively, each one of the plurality of unicast content messages corresponding to one of the plurality of terminals (3, 3'),
• routing the plurality of unicast content messages (5, 5') with the identical content to a message interceptor,
• receiving the plurality of unicast content messages (5, 5') with the identical content by the message interceptor,
• grouping the plurality of unicast content messages (5, 5') with the identical content into a distributable content message (6) by the message interceptor,
• distributing the distributable content message (6) to the plurality of terminals (3, 3') via the data network (1) by the message interceptor.

11. The method according to claim 10, comprising
• communicating the distributable content message (6) to a node (10) in the data network (1), the node (10) defining a data network segment by the message interceptor (8),
• distributing the distributable content message (6) via the data network (1) to at least one of the plurality of terminals (3, 3') by the node.

12. The method according to claim 10 - 11, comprising
• distributing the distributable content message (6), whereby the data network (1) is arranged to broadcast or multicast the distributable content message (6) respectively.

13. The method according to any one of the claims 15 - 17, comprising
• distributing the distributable content message (6) to at least one mobile terminal,
• distributing the distributable content message (6) via a radio network,
• distributing the one of the broadcast message and the multicast message via a radio base station which is arranged to communicate with the mobile terminal via the radio network, and
• broadcasting the broadcast message or the multicast message via a radio interface (12).

14. The method according to any one of the claims 13, wherein the node comprises a GGSN.

15. The method according to any one of the claims 13, wherein the node comprises a SGSN.

16. The method according to any one of the claims 13, wherein the node comprises the radio base station (13).
